# EUROPEAN PATENT APPLICATION

(11) **EP 4 571 895 A1**
(43) Date of publication of application: **18.06.2025**
(21) Application number: 24771091.6
(22) Date of filing: 29.02.2024
(51) Int. Cl.: H01M 4/62, H01M 4/04, H01M 4/38

(54) **PREPARATION METHOD OF ELECTRODE FOR ELECTROCHEMICAL DEVICE**

(30) Priority: 13.03.2023 KR 20230032605
(71) Applicant: LG Energy Solution, Ltd., Seoul 07335 (KR)
(72) Inventor: CHOI, Sang-A, Daejeon 34122 (KR); KIM, Bong-Soo, Daejeon 34122 (KR); KIM, Min-Su, Daejeon 34122 (KR); AHN, Ji-Hoon, Daejeon 34122 (KR)
(74) Representative: Goddar, Heinz J.
(86) International application number: PCT/KR2024/002694
(87) International publication number: WO 2024/191091

(57) **Abstract**

The present disclosure relates to a method for manufacturing an electrode, including: coating an electrode forming slurry on at least one surface of a current collector; and rolling the current collector coated with the electrode forming slurry, wherein the electrode forming slurry includes an electrode active material and an electrode binder, wherein the electrode binder includes an acrylic binder, and wherein the rolling is performed at a temperature of 105°C or more, thereby manufacturing the electrode having low moisture content by using the rolling process in the manufacture of the electrode using the aqueous binder.

## Description

### TECHNICAL FIELD

The present disclosure relates to a method for manufacturing an electrode for an electrochemical device.

More particularly, the present disclosure relates to a manufacturing method that can be applied in the manufacture of a lithium-sulfur battery.

The present application claims priority to Korean Patent Application No. 2023-0032605 filed on March 13, 2023 in the Republic of Korea, the disclosure of which is incorporated herein by reference.

### BACKGROUND

As the range of application of lithium secondary batteries is extended to not only mobile electronic devices but also electric vehicles (EV) and energy storage systems (ESS), there is a growing demand for lithium secondary batteries with high capacity, high energy density and long life.

Among various types of lithium secondary batteries, lithium-sulfur batteries are a battery system using sulfur compounds including sulfur-sulfur (S-S) bonds as a positive electrode active material and lithium metals as a negative electrode active material. Lithium-sulfur batteries have advantages that sulfur, the main component of the positive electrode active material has low atomic weight, is abundant in nature and can be found around the world, and is inexpensive, non-toxic and eco-friendly. In addition, among secondary batteries developed so far, lithium-sulfur batteries are gaining attention due to higher capacity than other battery systems.

Sulfur used in lithium-sulfur batteries is a poor conductor having the electrical conductivity of about 5 x 10⁻³⁰ S/cm because electrons produced by electrochemical reaction are not free to move, so sulfur-containing materials are combined with conductive materials such as carbon that provide electrochemical reaction sites into sulfur-carbon composites which are used as the positive electrode active material.

Meanwhile, during discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic S₈ structure, and it is converted to lithium polysulfide (Li₂Sₓ, x = 8, 6, 4, 2) by the reduction reaction and is completely reduced to lithium sulfide (Li₂S). However, the lithium polysulfide easily dissolves into the electrolyte solution during charging and discharging, causing battery capacity fading and cell degradation. To solve the lithium polysulfide dissolution problem, sulfur is loaded into pores of different types of porous carbon materials in the positive electrode.

**In** this instance, due to low density and large surface area, to use the sulfur-carbon composites including the porous carbon materials in the positive electrode, binders having high adhesive strength are needed. **In** this circumstance, many studies are being made on a variety of binders, and in particular, studies are being intensively made on aqueous binders to achieve low binder content and high sulfur loading.

However, when manufacturing electrodes using aqueous binders, it is necessary to perform a drying process to remove the remaining moisture in the electrodes, so there are lots of improvements left when using aqueous binders in electrodes such as, for example, complex manufacturing equipment and increased time and cost incurred in the manufacturing process. Still, there are many challenges in the use of aqueous binders.

### SUMMARY

### Technical Problem

The present disclosure is designed to solve the above-described problem, and therefore the present disclosure is directed to providing a new method for manufacturing an electrode for an electrochemical device using an aqueous binder by a simple and straightforward process.

More particularly, the present disclosure is directed to providing a method for manufacturing an electrode that is easy to apply an aqueous binder to a lithium-sulfur battery.

### Technical Solution

According to an aspect of the present disclosure, there is provided a method for manufacturing an electrode for an electrochemical device of the following embodiments.

The method for manufacturing the electrode for the electrochemical device according to a first embodiment includes coating an electrode forming slurry on at least one surface of a current collector, and rolling the current collector coated with the electrode forming slurry, wherein the electrode forming slurry includes an electrode active material and an electrode binder, wherein the electrode binder includes an acrylic binder, and wherein the rolling is performed at a temperature of 105°C or more.

According to a second embodiment, in the first embodiment, the acrylic binder may be included in an amount of 0.1 wt% or more based on a total weight of the electrode active material and the electrode binder.

According to a third embodiment, in the first or second embodiment, the acrylic binder may include a polymer including at least one of (meth)acrylic acid, (meth)acrylamide or acrylonitrile as a monomer, a copolymer or a mixture thereof.

According to a fourth embodiment, in any one of the first to third embodiments, the electrode binder may further include at least one of a cellulose-based binder or a rubber-based binder.

According to a fifth embodiment, in any one of the first to fourth embodiments, the electrode binder may include an acrylic binder, a cellulose-based binder and a rubber-based binder, and the acrylic binder may be included in an amount of from 10 wt% to 95 wt% based on a total weight of the acrylic binder, the cellulose-based binder and the rubber-based binder.

According to a sixth embodiment, in any one of the first to fifth embodiments, the cellulose-based binder may include carboxymethyl cellulose, carboxyethyl cellulose, hydroxyethyl cellulose, hydroxypropylmethyl cellulose, nitro cellulose, diethylaminoethyl cellulose or a mixture thereof.

According to a seventh embodiment, in any one of the first to sixth embodiments, the rubber-based binder may include styrene-butadiene rubber, acrylonitrile-butadiene rubber, acrylonitrile-butadiene-styrene rubber, butyl rubber, fluoro rubber, acrylic rubber or a mixture thereof.

According to an eighth embodiment, in any one of the first to seventh embodiments, the rolling may be performed at the temperature of from 105°C to 140°C.

According to a ninth embodiment, in any one of the first to eighth embodiments, a moisture content in the electrode after the rolling may be 1,000 ppm or less.

According to a tenth embodiment, in any one of the first to ninth embodiments, a moisture content in the electrode before the rolling may be 1,000 ppm or more.

According to an eleventh embodiment, in any one of the first to tenth embodiments, the method may further include cutting the rolled electrode.

According to a twelfth embodiment, in any one of the first to eleventh embodiments, substantially, the method may not further include drying the electrode after the rolling.

According to a thirteenth embodiment, in any one of the first to twelfth embodiments, the electrode active material may include a sulfur-containing compound.

According to a fourteenth embodiment, in any one of the first to thirteenth embodiments, a weight ratio of the electrode active material to the electrode binder may be from 90: 10 to 98:2 (the electrode active material: the electrode binder).

According to another aspect of the present disclosure, there is provided an electrode for an electrochemical device of the following embodiment.

The electrode for the electrochemical device according to a fifteenth embodiment is manufactured by the method according to any one of the first to fourteenth embodiments.

### Advantageous Effects

According to the method for preparing the electrode binder according to an aspect of the present disclosure, it may be possible to provide the method for manufacturing the electrode in which the moisture content in the electrode after rolling is low, thereby eliminating a drying process, leading to cost and time savings.

In particular, it may be possible to manufacture the electrode with high electrode adhesion strength in a cost and time efficient manner by using the aqueous binder.

Furthermore, it may be possible to manufacture the electrode with high electrode adhesion strength in lithium-sulfur battery applications.

### DETAILED DESCRIPTION

Hereinafter, the present disclosure will be described in detail. However, the present disclosure is not limited to the following description, and each element may be variously modified or selectively used together where necessary. Accordingly, it should be understood that the present disclosure includes all modifications, equivalents or substitutes included in the technical aspect and scope of the present disclosure.

The term "comprise" or "include" when used in this specification, specifies the presence of stated elements, but does not preclude the presence or addition of one or more other elements, unless the context clearly indicates otherwise.

According to an aspect of the present disclosure, there are provided a method for manufacturing an electrode for an electrochemical device and an electrode for an electrochemical device manufactured by the method.

The electrochemical device includes any device in which electrochemical reaction takes place, and specific examples may include any type of primary battery, secondary battery, fuel cell, solar cell or capacitor such as super capacity. In particular, among these secondary batteries, lithium secondary batteries including lithium metal secondary batteries, lithium ion secondary batteries, lithium polymer secondary batteries or lithium-sulfur secondary batteries are preferred. The detailed structure of the electrochemical device is well known, and its description is omitted.

The electrochemical device may be included as a unit cell in an energy storage system, and its use is not limited to a particular application. The detailed structure of the energy storage system is well known, and its description is omitted.

The method for manufacturing the electrode for the electrochemical device includes coating an electrode forming slurry on at least one surface of a current collector and rolling the current collector coated with the electrode forming slurry, wherein the electrode forming slurry includes an electrode active material and an electrode binder, the electrode binder includes an acrylic binder, and the rolling is performed at the temperature of 105°C or more.

The electrode forming slurry forms an electrode active material layer on at least one surface of the current collector, and is a solution including the electrode active material and the electrode binder.

In an embodiment of the present disclosure, the coating of the electrode forming slurry may be performed by any method commonly used to coat the electrode forming slurry on the current collector, and the coating means and method are not limited to particular ones.

In an embodiment of the present disclosure, the electrode forming slurry may be formed by adding the electrode active material and the electrode binder to a solvent simultaneously or sequentially. Additionally, in another embodiment of the present disclosure, the electrode forming slurry may be formed by mixing the electrode active material with a dispersion in which the electrode binder is dispersed or a binder solution in which the electrode binder is dissolved. In any case, the electrode forming slurry includes predetermined materials in liquid state.

In an embodiment of the present disclosure, after coating the electrode forming slurry on at least one surface of the current collector, before the rolling step, the method may further include pre-drying the current collector coated with the electrode forming slurry to prepare a preliminary electrode. In this instance, the pre-drying is performed to set the electrode forming slurry coated on at least one surface of the current collector to prevent it from flowing out of the coating area, and may be performed by any method commonly used to set the electrode forming slurry without limitation.

In an embodiment of the present disclosure, the electrode binder includes an aqueous binder to improve the electrode adhesion strength and prevent the environmental problem caused by nonaqueous binders.

In particular, the electrode forming slurry includes an acrylic binder as the electrode binder. When the acrylic binder is included as the electrode binder, it may be possible to manufacture the electrode with improved electrode adhesion strength, but the effect of the present disclosure is not limited thereto.

In an embodiment of the present disclosure, the acrylic binder is one of aqueous binders used to manufacture electrodes, and refers collectively to binders including at least one acrylic structure (-C=C-C(O)O-) or acrylic precursor structure in the structure of the binder. The acrylic precursor structure refers collectively to structures that form the acrylic structure through chemical modification. The acrylic precursor structure may include, for example, structures derived from acrylonitrile (CH₂CHCN) as a raw material.

In an embodiment of the present disclosure, the acrylic binder may be included, for example, in an amount of 0.1 wt% or more based on the total weight of the electrode active material and the electrode binder. Specifically, the acrylic binder may be included in an amount of from 0.1 wt% to 10 wt%, specifically from 0.5 wt% to 5 wt%, from 1 wt% to 5 wt%, from 1 wt% to 2.5 wt%, from 1 wt% to 2.0 wt%, from 1.5 wt% to 2.0 wt% or from 1.5 wt% to 1.8 wt% based on the total weight of the electrode active material and the electrode binder. When the acrylic binder is included in the aforementioned range of amounts, this may have a beneficial effect on the loading amount of the active material in the resulting electrode and electrode adhesion strength, but the present disclosure is not limited thereto.

In an embodiment of the present disclosure, the acrylic binder may include, for example, polymer including at least one of (meth)acrylic acid, (meth)acrylamide or acrylonitrile as a monomer, a copolymer or a mixture thereof. Specifically, the acrylic binder may include poly(meth)acrylic acid, poly(meth)acrylamide, an acrylamide-acrylic acid copolymer, polyacrylonitrile or a mixture thereof, but is not limited thereto.

In another embodiment of the present disclosure, in addition to the acrylic binder, the electrode binder may further include another aqueous binder used to manufacture the electrode.

The aqueous binder other than the acrylic binder may include, for example, a cellulose-based binder or a rubber-based binder.

Accordingly, in an embodiment of the present disclosure, the electrode binder may further include at least one of the cellulose-based binder or the rubber-based binder, but is not limited thereto.

The cellulose-based binder refers collectively to binders including cellulose or its derivative structure in the structure of the binders. The cellulose-based binder may include, for example, carboxymethyl cellulose, carboxyethyl cellulose, hydroxyethyl cellulose, hydroxypropylmethyl cellulose, nitro cellulose, diethylaminoethyl cellulose or a mixture thereof.

The rubber-based binder refers collectively to rubber-based binders used to manufacture the electrode. The rubber-based binder may include, for example, styrene-butadiene rubber, acrylonitrile-butadiene, acrylonitrile-butadiene-styrene rubber, butyl rubber, fluoro rubber, acrylic rubber or a mixture thereof, but is not limited thereto.

In an embodiment of the present disclosure, the butyl rubber refers to rubber with substitution of a butyl group, and may include, for example, rubbers including at least one butyl group as a substituent in styrene rubber, butadiene rubber, styrene-butadiene rubber, acrylonitrile-butadiene or acrylonitrile-butadiene-styrene rubber.

In an embodiment of the present disclosure, the fluoro rubber refers to rubber with substitution of a fluorine (F) atom, and may include, for example, rubbers including at least one fluorine atom as a substituent in styrene rubber, butadiene rubber, styrene-butadiene rubber, acrylonitrile-butadiene or acrylonitrile-butadiene-styrene rubber.

In an embodiment of the present disclosure, the acrylic rubber refers to rubber with substitution of a (meth)acrylate group, and may include, for example, rubbers including at least one (meth)acrylate group as a substituent in styrene rubber, butadiene rubber, styrene-butadiene rubber, acrylonitrile-butadiene or acrylonitrile-butadiene-styrene rubber. For example, the acrylic rubber may include styrene-butyl acrylate rubber.

In an embodiment of the present disclosure, the electrode binder may include two types of binders of the acrylic binder and the cellulose-based binder. In this instance, the acrylic binder and the cellulose-based binder may be included a weight ratio of from 1:3 to 3:1, or from 1:2 to 2:1, for example, 1: 1, but the present disclosure is not limited thereto.

In another embodiment of the present disclosure, the electrode binder may include two types of binders of the acrylic binder and the rubber-based binder. In this instance, the acrylic binder and the rubber-based binder may be included at a weight ratio of from 1:3 to 3:1, or from 1:2 to 2:1, for example, 1: 1, but the present disclosure is not limited thereto.

In another embodiment of the present disclosure, the electrode binder may include three types of binders of the acrylic binder, the cellulose-based binder and the rubber-based binder.

In an embodiment of the present disclosure, when the electrode binder includes the acrylic binder, the cellulose-based binder and the rubber-based binder, the acrylic binder may be included in an amount of from 10 wt% to 95 wt% based on the total weight of the acrylic binder, the cellulose-based binder and the rubber-based binder. Specifically, the acrylic binder may be included in an amount of from 10 wt% to 90 wt%, from 10 wt% to 70 wt%, from 10 wt% to 50 wt%, from 15 wt% to 50 wt%, from 20 wt% to 50 wt%, from 25 wt% to 45 wt%, from 30 wt% to 45 wt%, from 35 wt% to 45wt% or from 40 wt% to 45 wt% based on the total weight of the acrylic binder, the cellulose-based binder and the rubber-based binder.

In an embodiment of the present disclosure, the cellulose-based binder may be included in an amount of from 0.1 wt% to 25 wt%, from 0.5 wt% to 25 wt%, from 1 wt% to 25 wt%, from 5 wt% to 25 wt%, from 5 wt% to 20 wt%, from 5 wt% to 15 wt%, from 5 wt% to 10 wt% or from 1 wt% to 5 wt% based on the total weight of the acrylic binder, the cellulose-based binder and the rubber-based binder. Additionally, the rubber-based binder may be included in an amount of from 0.1 wt% to 65 wt%, from 4.9 wt% to 60 wt%, from 5 wt% to 55 wt%, from 10 wt% to 50 wt%, from 20 wt% to 50 wt%, from 30 wt% to 50 wt%, from 40 wt% to 50 wt% or from 45 wt% to 50 wt% based on the total weight of the acrylic binder, the cellulose-based binder and the rubber-based binder.

When the three types of binders are included in the aformentioned amounts, this may have a beneficial effect on electrode adhesion strength and the moisture content in the resulting electrode, but the present disclosure is not limited thereto.

In another embodiment of the present disclosure, in addition to the above-described aqueous binder, the electrode binder may further include a nonaqueous binder without hindering the objective of the present disclosure.

In an embodiment of the present disclosure, the nonaqueous binder may include, for example, fluorine-based binders commonly used to manufacture the electrode. The fluorine-based binders may include, for example, polyvinylidene fluoride (PVDF), polyvinylidenefluoride-hexafluoropropylene (PVDF-HFP), polyvinylidenefluoride-chlorotrifluoroethylene (PVDF-CTFE), polytetrafluoroethylene (PTFE) or a mixture thereof, but are not limited thereto.

In an embodiment of the present disclosure, in addition to the electrode active material and the electrode binder, the electrode forming slurry may further include a conductive material without hindering the objective of the present disclosure. The conductive material may include any type of conductive material commonly used in the electrode for the electrochemical device without limitation.

The acrylic binder has a property of absorbing moisture in air through its unique structure, and accordingly, for example, it is used as materials of moisture absorbers in a diverse range of applications. Accordingly, the acrylic binder is known as a material used to manufacture the electrode due to high adhesive strength, but due to its inherent ability to absorb moisture, it requires a drying process to remove moisture after the manufacture of the electrode.

According to an embodiment of the present disclosure, the current collector coated with the electrode forming slurry may get dry at high temperature, specifically temperature of 105°C or more to remove moisture in the electrode binder, in particular, the acrylic binder. Accordingly, the method for manufacturing the electrode is characterized by performing rolling and drying at the same time. According to an embodiment of the present disclosure, rolling at high temperature may be referred to as 'hot rolling'.

According to an embodiment of the present disclosure, the temperature at the hot rolling step is preferably in a temperature range in which sulfur included as the positive electrode active material does not volatilize. To this end, the rolling may be preferably performed, for example, at the temperature of 150°C or less, 145°C or less, 140°C or less, preferably 135°C or less, but the present disclosure is not limited thereto.

In an embodiment of the present disclosure, the rolling may be performed, for example, at the temperature of 110°C or more, 115°C or more, 120°C or more, specifically from 120°C to 150°C, from 120°C to 145°C, from 120°C to 140°C, from 120°C to 135°C, from 120°C to 130°C, from 125°C to 135°C, or 130°C.

In an embodiment of the present disclosure, the rolling step may be performed using a roll press machine. Specifically, the roll press may work while supplying heat to the roller so that the roller temperature is high, in particular, up to the above-described temperature.

In another embodiment of the present disclosure, the rolling step may be performed using a hot press machine. In this instance, the press used to perform the hot pressing may have a plate shape, but may have a roll shape, but the present disclosure is not limited thereto.

In an embodiment of the present disclosure, as described above, the rolling step is performed to remove moisture in the electrode binder, in particular, the acrylic binder, and is preferably performed in a dry environment.

In an embodiment of the present disclosure, the rolling step may be performed in the dew point condition of 0°C or less. The dew point may be measured by commonly used methods, and for example, may be measured using a dew point meter with a thermometer and a hygrometer.

In another embodiment of the present disclosure, the rolling step may be performed in the absolute humidity condition of 0.00377 kg /kg or less. In this instance, the absolute humidity indicates a measured value of the amount of water vapor (kg) per 1 kg of dry air, and may be measured by methods commonly used to measure the absolute humidity.

According to an embodiment of the present disclosure, it may be possible to significantly reduce the moisture content in the electrode forming slurry coated on one surface of the current collector through the rolling step.

For example, the moisture content in the electrode after the rolling may be 1,000 ppm or less. Specifically, the moisture content in the electrode after the rolling may be 800 ppm or less, 600 ppm or less, 500 ppm or less or 300 ppm or less. According to an aspect of the present disclosure, preferably, the moisture content in the resulting electrode is zero or too low to measure by the moisture measurement method, and the lower limit of the moisture content in the electrode is not limited to a particular range and is preferably 0 ppm.

According to an embodiment of the present disclosure, it may be possible to make a big difference in moisture content in the electrode before and after the rolling step.

For example, the moisture content in the electrode before the rolling may be 1,000 ppm or more, specifically more than 1,000 ppm, for example, 1,200 ppm or more, and the moisture content in the electrode after the rolling may be 1,000 ppm or less, for example, 800 ppm or less.

In the specification, the moisture content in the electrode may be measured using a Karl Fischer moisture meter. Specifically, a Karl Fischer moisture meter (Metrohm 756KF Coulometer) may be used. The electrode to be measured may be punched into a circular shape with a diameter of 14Φ to prepare 10 samples, and the moisture content may be the average of three measurements for each samples.

In an embodiment of the present disclosure, when the rolling step is performed, it may be possible to reduce the thickness of the electrode, thereby improving the electrical and chemical properties of the electrode. Specifically, the rolling step may be performed in the compaction ratio condition of 5% or more according to the following Equation 1. For example, the rolling step may be performed in the compaction ratio condition of from 5% to 10%. Compaction ratio (%) = [(thickness of electrode before rolling - thickness of electrode after rolling)/thickness of electrode before rolling] X 100

In the specification, the thickness of the electrode refers to the sum of the thickness of the current collector and the thickness of the electrode active material layer, and may be measured by methods commonly used to measure the thickness of each element of the electrode. For example, the thickness of the electrode may be measured using an SEM cross section image of the electrode or a thickness meter (Mitutoyo).

According to an embodiment of the present disclosure, the method for manufacturing the electrode may include unwinding the wound current collector, coating the electrode forming slurry and rolling to form the long electrode. Accordingly, the method for manufacturing the electrode may further include a cutting step for cutting the rolled electrode into a plurality of unit electrodes.

Conventionally, the method for manufacturing the electrode further includes, after the rolling, the step of drying to completely remove the remaining moisture in the electrode before or after or during cutting the electrode. However, according to the method for manufacturing the electrode according to an aspect of the present disclosure, the rolling and drying of the electrode may be performed at a single step through the hot rolling step, so the method may not include, in substance, the step of drying the electrode after the rolling step.

In the specification, not including, in substance, the step of drying the electrode refers to not performing the step of supplying dry air or additional heat to the rolled electrode through a dry air supplier or a heat supplier to remove the remaining moisture after rolling the electrode, and does not preclude becoming more dry by natural evaporation of the remaining moisture from the rolled electrode.

In an embodiment of the present disclosure, the electrode for the electrochemical device may be a positive electrode or a negative electrode.

In an embodiment of the present disclosure, when the electrode for the electrochemical device is a positive electrode, the electrode active material may include positive electrode active materials commonly used in the art.

In another embodiment of the present disclosure, the electrode may be a positive electrode for use in a lithium-sulfur battery, and the electrode active material may include a sulfur-containing compound.

In still another embodiment of the present disclosure, the electrode may be a positive electrode for use in a lithium-sulfur battery, and the electrode active material may include a porous carbon support and a sulfur-containing compound loaded into at least one of inner pores or outer pores of the porous carbon support.

In an embodiment of the present disclosure, the sulfur-containing compound may be used as a positive electrode active material of a lithium-sulfur battery and may include, for example, inorganic sulfur (S₈), lithium sulfide (Li₂S), lithium polysulfide (Li₂Sₓ, 1<x≤8), disulfide compounds or a mixture thereof, but the present disclosure is not limited thereto.

In an embodiment of the present disclosure, when the electrode for the electrochemical device is a negative electrode, the electrode active material may include negative electrode active materials commonly used in the art.

In another embodiment of the present disclosure, the electrode may be a negative electrode for use in a lithium-sulfur battery.

In an embodiment of the present disclosure, the current collector is not limited to a particular type and may include those having high conductivity without causing a chemical change in the corresponding battery.

According to another aspect of the present disclosure, there is provided the electrode for the electrochemical device manufactured by the above-described manufacturing method.

The electrode includes the current collector, and the electrode active material layer on at least one surface of the current collector.

The electrode active material layer may include the electrode active material and the electrode binder, and have a structure in which the electrode active material is bonded by the electrode binder.

In the present disclosure, the electrode binder is characterized by including the acrylic binder.

According to the present disclosure, the electrode includes the acrylic binder but achieves low moisture content, thereby ensuring high stability in assembling when used in the electrochemical device, but the present disclosure is not limited thereto.

Hereinafter, the present disclosure will be described in detail through experimental examples.

### Experimental Example 1

### [Manufacture of positive electrode]

A sulfur-carbon composite (S/C 70:30) as an electrode active material and an electrode binder were added to water (H₂O) as a solvent according to the composition of TABLE 1 below and mixed using a planetary disperser mixer (a PD mixer) to prepare a positive electrode forming slurry of a lithium-sulfur battery.

Specifically, portions of the binder and the solvent (water) and the active material were mixed and dispersed by kneading, and further mixed with an addition of the remaining binder and solvent to prepare the positive electrode forming slurry.

The positive electrode forming slurry was applied to an aluminum foil current collector using a coater (Mathis AG), pre-dried in a 50°C oven and hot-rolled (speed: 50 Hz) using a 130°C roll press in a dry room to obtain a positive electrode for a lithium-sulfur battery.

### [Evaluation of properties of electrode]

### Evaluation of moisture content before and after rolling

The moisture content in the electrode immediately before and after rolling was measured using a Karl Fischer moisture meter (Metrohm 756KF coulometer), and the results are shown in TABLE 2 below.

Specifically, the electrode each immediately before and after rolling was punched into a circular shape with a diameter of 14Φ to prepare 10 samples and the moisture content was the average of three measurements.

**[TABLE 1]**

| Compositio n of positive electrode | Electrode active material (S/C) (wt%) | Electrode binder (wt%) | Sulfur loading before rolling (mAh/cm²) | Composition of electrode binder | | |
|---|---|---|---|---|---|---|
| | | | | PAA | CMC | SBR |
| Comparativ e Example 1 | 97 | 3 | 2.65 | - | 1.0 | 2.0 |
| Example 1 | 96 | 4 | 2.78 | 1.5 | 0.5 | 2.0 |
| - PAA: polyacrylic acid | | | | | | |
| - CMC: carboxymethylcellulose | | | | | | |
| - SBR: styrene-butadiene rubber | | | | | | |

**[TABLE 2]**

| Evaluation result | Sulfur loading after rolling (mAh/cm²) | Moisture content (ppm) | |
|---|---|---|---|
| | | Before rolling | After rolling |
| Comparativ e Example 1 | 2.65 | 351 | Blank |
| Example 1 | 2.78 | 1,403 | 268 |

As can be seen through the above TABLE 1 and TABLE 2, it was confirmed that the rolling conditions were suitable because they did not cause a change in sulfur loading before and after rolling.

Additionally, when polyacrylic acid (PAA) was not included as the electrode binder like Comparative Example 1, the moisture content in the electrode before rolling was 1,000 ppm or less, while when polyacrylic acid was included as the electrode binder like Example 1, the moisture content in the electrode before rolling was higher than 1,000 ppm, so it is necessary to perform a process of removing moisture, and the moisture content was notably decreased through the hot rolling step, revealing that it could be used in the battery assembly without a drying process.

### Experimental Example 2

### [Manufacture of positive electrode]

An electrode forming slurry was prepared with the same composition as Example 1 of Experimental Example 1, applied to an aluminum foil current collector using a coater (Mathis AG) and pre-dried in a 50°C oven to obtain a preliminary electrode.

An electrode was manufactured using the obtained preliminary electrode by the subsequent process shown in TABLE 3 below and the moisture content in the electrode was evaluated, and the results are shown in TABLE 3.

In TABLE 3 below, 'room temperature rolling' indicates rolling using a roll press of 25°C, and 'secondary drying' indicates secondary drying in a 80°C oven for 2 hours without a rolling process.

To compare the evaluation results, TABLE 3 below shows the evaluation results of Example 1 together.

**[TABLE 3]**

| | Subsequent process | Moisture content after subsequent process (ppm) |
|---|---|---|
| Example 1 | 130°C hot rolling | 268 |
| Comparative Example 2 | Room temperature rolling | 1,403 |
| Comparative Example 3 | Secondary drying | 995 |

As can be seen from the above TABLE 3, it was confirmed that when manufacturing the electrode using PAA, room temperature rolling requires the subsequent drying process, while 130°C hot rolling could achieve low moisture content without the subsequent drying process. In particular, it was confirmed that it was possible to eliminate the secondary drying process requiring a long time, thereby dramatically saving the cost and time of the electrode manufacturing method.

### Experimental Example 3

### [Manufacture of positive electrode]

An electrode forming slurry was prepared according to the composition shown in TABLE 4 below, the prepared electrode forming slurry was coated on an aluminum foil and pre-dried, and the subsequent process shown in TABLE 5 below was performed to manufacture an electrode.

### [Evaluation of properties of electrode]

### Evaluation of moisture content

The moisture content in the electrode before and after the subsequent process was measured using a Karl Fischer moisture meter (Metrohm 756KF coulometer), and the results are shown in TABLE 5 below.

### Evaluation of electrode adhesion strength

The electrode adhesion strength of the as-prepared electrode was measured by the following method, and the results are shown in TABLE 5 below.

Specifically, the electrode to be measured was punched into a size of 2 cm X 11 cm, attached such that the active material layer of the electrode was adhered to a slide glass to which a double-sided tape was attached, and then pulled off 90° at the speed of 30 mm/sec using UTM machine to measure peel strength.

**[TABLE 4]**

| Compo sition of positive electrod e | Electrode active material (S/C) (wt%) | Electro de binder (wt%) | Sulfur loading before rolling (mAh/cm² ) | Composition of electrode binder | | | Moisture content before subsequent process (ppm) |
|---|---|---|---|---|---|---|---|
| | | | | PAA | CMC | SBR | |
| Preparat ion Exampl e | 96 | 4 | 2.78 | 1.8 | 0.2 | 2.0 | 2,090 |

**[TABLE 5]**

| Classificatio n | Subsequent process | Electrode adhesion strength (gf/20 mm) | Moisture content after subsequent process (ppm) |
|---|---|---|---|
| Example 2 | 130°C hot rolling | 26.7 | 827 |
| Comparativ e Example 2 | 80°C hot rolling | 20.8 | 1807 |
| Comparativ e Example 3 | 100°C hot rolling | 23.7 | 1243 |

According to the above TABLE 4 and TABLE 5, it was confirmed that compared to Example 1, when the electrode forming slurry having higher PAA content was used, the moisture content in the electrode before rolling was more than 2,000 ppm, i.e., the electrode had much higher moisture content.

It was confirmed that when the electrode having high moisture content was hot-rolled at 130°C, the resulting electrode had suitable electrode adhesion strength and moisture content as low as 1,000 ppm or less to be used in battery assembly.

Through the above experiments, it was confirmed that according to the method for manufacturing the electrode according to an aspect of the present disclosure, it was possible to manufacture the electrode having low moisture content without the secondary drying step requiring a long time when manufacturing the electrode using aqueous binders.

In particular, it was confirmed that it was possible to manufacture the electrode having the outstanding properties in terms of electrode adhesion strength and moisture content even at the high amount of acrylic binder having high adhesive property.

### Experimental Example 4

### [Manufacture of positive electrode]

An electrode forming slurry was prepared with the same composition as each of Example 1 and Comparative Example 1 of Experimental Example 1, applied to an aluminum foil current collector using a coater (Mathis AG) and pre-dried in a 50°C oven to obtain a preliminary electrode.

An electrode was manufactured using the obtained preliminary electrode by the subsequent process shown in TABLE 6 below, and a change in sulfur loading in the electrode before and after rolling was evaluated, and the results are shown in TABLE 6 below.

The change in sulfur loading in the electrode before and after rolling was evaluated as follows.

First, the as-prepared preliminary electrode was punched into a size of 5 cm X 5 cm (25 cm²) to prepare a total of 10 sheets. Among them, 5 sheets were used to measure the loading amount in the electrode before rolling and 5 sheets were used to measure the loading amount in the electrode after rolling, and rolling was performed according to the subsequent process shown in TABLE 6 below.

Solid powder collected by taking the active material layer from the current collector of the preliminary electrode or the rolled electrode was analyzed by Inductively coupled plasma optical emission spectrometry (ICP-OES) to measure the weight of sulfur (S) based on the total weight of the active material layer, a change in sulfur weight before and after rolling was measured based on the area of the positive electrode active material layer (25 cm² X 5, 125 cm² in total) and the evaluation results are shown in TABLE 6 below.

**[TABLE 6]**

| Composition | Subsequent process | Change in sulfur loading (Δ) |
|---|---|---|
| Example 1 | 130°C hot rolling | - (none) |
| Comparative Example 1 | 130°C hot rolling | - (none) |
| Example 1-A | 150°C hot rolling | - 8 mg/125 cm² |
| Comparative Example 1-A | 150°C hot rolling | - 11 mg/125 cm² |

From the results of the above TABLE 6, it was confirmed that when the hot rolling temperature was too high, sulfur loss in the active material layer may occur.

## Claims

1. A method for manufacturing an electrode for an electrochemical device, the method comprising:
coating an electrode forming slurry on at least one surface of a current collector; and
rolling the current collector coated with the electrode forming slurry,
wherein the electrode forming slurry includes an electrode active material and an electrode binder,
wherein the electrode binder includes an acrylic binder, and
wherein the rolling is performed at a temperature of 105°C or more.

2. The method for manufacturing the electrode for the electrochemical device according to claim 1, wherein the acrylic binder is included in an amount of 0.1 wt% or more based on a total weight of the electrode active material and the electrode binder.

3. The method for manufacturing the electrode for the electrochemical device according to claim 1, wherein the acrylic binder includes a polymer including at least one of (meth)acrylic acid, (meth)acrylamide or acrylonitrile as a monomer, a copolymer or a mixture thereof.

4. The method for manufacturing the electrode for the electrochemical device according to claim 1, wherein the electrode binder further includes at least one of a cellulose-based binder or a rubber-based binder.

5. The method for manufacturing the electrode for the electrochemical device according to claim 1, wherein the electrode binder includes an acrylic binder, a cellulose-based binder and a rubber-based binder, and
wherein the acrylic binder is included in an amount of from 10 wt% to 95 wt% based on a total weight of the acrylic binder, the cellulose-based binder and the rubber-based binder.

6. The method for manufacturing the electrode for the electrochemical device according to claim 4, wherein the cellulose-based binder includes carboxymethyl cellulose, carboxyethyl cellulose, hydroxyethyl cellulose, hydroxypropylmethyl cellulose, nitro cellulose, diethylaminoethyl cellulose or a mixture thereof.

7. The method for manufacturing the electrode for the electrochemical device according to claim 4, wherein the rubber-based binder includes styrene-butadiene rubber, acrylonitrile-butadiene rubber, acrylonitrile-butadiene-styrene rubber, butyl rubber, fluoro rubber, acrylic rubber or a mixture thereof.

8. The method for manufacturing the electrode for the electrochemical device according to claim 1, wherein the rolling is performed at the temperature of from 105°C to 140°C.

9. The method for manufacturing the electrode for the electrochemical device according to claim 1, wherein a moisture content in the electrode after the rolling is 1,000 ppm or less.

10. The method for manufacturing the electrode for the electrochemical device according to claim 1, wherein a moisture content in the electrode before the rolling is 1,000 ppm or more.

11. The method for manufacturing the electrode for the electrochemical device according to claim 1, further comprising:
cutting the rolled electrode.

12. The method for manufacturing the electrode for the electrochemical device according to claim 1, wherein the method substantially does not further include drying the electrode after the rolling.

13. The method for manufacturing the electrode for the electrochemical device according to claim 1, wherein the electrode active material includes a sulfur-containing compound.

14. The method for manufacturing the electrode for the electrochemical device according to claim 1, wherein a weight ratio of the electrode active material to the electrode binder is from 90:10 to 98:2 (the electrode active material: the electrode binder).

15. An electrode for an electrochemical device manufactured by the manufacturing method according to any one of claims 1 to 14.
